(19) Europäisches Patentamt
European Patent Office
Office européen des brevets

(11) Veröffentlichungsnummer: **0 224 750 B1**

# EUROPÄISCHE PATENTSCHRIFT

(12)

(45) Veröffentlichungstag der Patentschrift:
30.01.91 Patentblatt 91/05

(51) Int. Cl.$^5$: **A01D 41/12**

(21) Anmeldenummer: **86115414.4**

(22) Anmeldetag: **06.11.86**

(54) **Vorrichtung für Mähdrescher zum Verteilen von Spreu.**

Teilanmeldung 90102225.1 eingereicht am 06/11/86.

(30) Priorität: **02.12.85 DE 3542577**

(43) Veröffentlichungstag der Anmeldung:
**10.06.87 Patentblatt 87/24**

(45) Bekanntmachung des Hinweises auf die Patenterteilung:
**30.01.91 Patentblatt 91/05**

(84) Benannte Vertragsstaaten:
**AT BE FR GB IT SE**

(56) Entgegenhaltungen:
**EP-A- 0 181 500
DE-A- 2 620 875
DE-A- 2 805 208
DE-B- 1 071 403
DE-C- 960 683**

(56) Entgegenhaltungen:
**FR-A- 374 282
FR-A- 1 281 759
GB-A- 1 168 910
GB-A- 2 025 746
US-A- 2 826 204
US-A- 4 137 923**

(73) Patentinhaber: **BISO Bitter GmbH. & Co.KG.
Ladestrasse 3 - 9
D-4986 Rödinghausen-Bruchmühlen (DE)**

(72) Erfinder: **Scharf, Alois
Kohne-Weg 7
D-4520 Melle 8 St. Annen (DE)**

(74) Vertreter: **Gossel, Hans K., Dipl.-Ing. et al
Rechtsanwälte E. Lorenz - B. Seidler M.
Seidler - Dipl.-Ing. H.K. Gossel Dr. I. Philipps -
Dr. P.B. Schäuble Dr. S. Jackermeier -
Dipl.-Ing. A. Zinnecker
Widenmayerstrasse 23 D-8000 München 22
(DE)**

EP 0 224 750 B1

**Beschreibung**

Die Erfindung betrifft eine Vorrichtung in Verbindung mit einem Mähdrescher zum Verteilen der Spreu nach dem Oberbegriff des Anspruchs 1.

In Mähdreschern sind unter den - gegebenenfalls vorhandenenStrohschüttlern Kurzstroh- und Körnersiebe angeordnet, auf denen Kurzstroh und die Spreu ausgesiebt wird, die durch vor den Siebkästen angeordnete Gebläse auf den Acker geblasen wird.

Wird das Stroh nicht lose auf den Acker geschüttet oder in Form von gepreßten Ballen gesammelt, kann unterhalb des hinteren Endes der Strohschüttler in dem Mähdrescher ein sogenannter Anbauhäcksler angeordnet sein, in den das Langstroh fällt und der dieses in gehäckselter Form möglichst gleichmäßig über die Schnittbreite des Mähdreschers hinter diesem ausstreut. Während üblicherweise eine möglichst gleichmäßige Verteilung des gehäckselten Strohs durch im Auslaufbereich des Anbauhäckslers angeordnete Strohverteilungsbleche angestrebt wird, fällt die von den Siebkästen ausgeblasene Spreu ohne besondere Verteilereinrichtungen auf den Acker, so daß sich nur eine sehr ungleichmäßige Verteilung über die Schnittbreite des Mähdreschers ergibt und unerwünschte Anhäufungen auftreten können. Da der Spreuanteil etwa ein Viertel des Strohs beträgt, kann dieser eine gute Verteilung des von einem Anbauhäcksler ausgestoßenen Häcksels zunichtemachen, wenn sich dieser dem verteilten Häcksel in Form eines Schwad überlagert.

Aus der US-A-4 137 923 ist eine Vorrichtung für Mähdrescher zum Verteilen der Spreu bekannt, die zwei einander gegenüberliegende Windräder besitzt, die gleichsinnig rotieren.

Aus der DE-B-1 071 403 ist eine Vorrichtung für Mähdrescher zum Verteilen der Spreu nach dem Oberbegriff des Anspruchs 1 bekannt.

Aufgabe der Erfindung ist es, eine Vorrichtung dieser Art zu schaffen, die sich raumsparend hinter den Siebkästen anordnen läßt und eine möglichst gleichmäßige Verteilung der Spreu ermöglicht.

Erfindungsgemäß wird diese Aufgabe durch die im kennzeichnenden Teil des Anspruchs 1 angegebenen Merkmale gelöst. Das Gehäuse ist unmittelbar oder über Trageinrichtungen an den Seitenwänden oder seitlichen Trägern des Mähdreschers im Bereich der Höhe der Siebkästen hinter diesen und unterhalb der Strohschüttler -soweit vorhanden - angeordnet. Jede der etwa in Richtung der Siebkästen weisenden Ausblasöffnungen und die Leitbleche lenken den austretenden Blasluftstrom in Richtung auf jeweils eine Seitenwand des Mähdreschers um. Die erfindungsgemäße Vorrichtung läßt sich raumsparend hinter den Siebkästen unterhalb der Strohschüttler anordnen. Ist der Mähdrescher mit einem Strohhäcksler versehen, befindet sich das Blasluftdüsen aufweisende

Gehäuse in dem Raum zwischen den Siebkästen und dem Häcksler unterhalb der Strohschüttler.

Durch die Ausblasöffnungen und Leitbleche werden fächerartig in Richtung auf die Seitenwände bzw. nach außen gerichtete Blasluftströme geschaffen, die die zugeblasene bzw. angesaugte Spreu fächerartib über die Schnittbreite des Mähdreschers auf den Acker blasen und dadurch über die Schnittbreite gleichmäßig verteilen.

Das Gehäuse kann aus einem im Bereich der Seitenwände des Mähdreschers befestigten, quer zu diesem verlaufenden Rohr bestehen, das mit mehreren über seine Länge verteilten Öffnungen versehen ist, wobei im Bereich der Austrittsöffnungen einen spitzen Winkel mit der Längsachse des Rohres einschließende Leitbleche befestigt sind, die ausgehend von dem mittleren Bereich des Rohres jeweils auf die nächstliegende Seitenwand gerichtet sind. Die ausgehend von dem mittleren Bereich jeweils auf die gegenüberliegenden Seiten schräggestellten Blasluftdüsen lenken den Blasluftstrom und damit die Spreu um, so daß diese fächerartig verteilt wird. Die Anzahl und Richtung der Blasluftdüsen sowie deren Stromungsrichtung und die Strömungsgeschwindigkeit der Blasluft werden entsprechend dem vorhandenen, die Spreu zuführenden Blasluftstrom derart gewählt, daß sich eine möglichst gleichmäßige Verteilung ergibt. Die Düsenöffnungen des Gehäuses bzw. Rohres sind derart angeordnet, daß die die Spreu mitführenden Luftströme seitlich oder diagonal abgelenkt und gegebenenfalls auch beschleunigt werden, so daß sich die Spreu über die Schnittbreite verteilt.

Zur Einstellung der aus jeder Austrittsöffnung austretenden Blasluftmenge kann diese durch schwenkbare Klappen verschließbar sein. Durch die Klappenstellung läßt sich die austretende Blasluftmenge bestimmen. Die Klappen selbst sind zweckmäßigerweise derart angeordnet, daß sie bereits die austretende Blasluft in die gewünschte Richtung umlenken.

Zweckmäßigerweise sind auch die Leitbleche am Rohr oder Gehäuse schwenkbar gelagert, so daß sich durch diese die Richtung der Blasluftströme einstellen läßt.

In weiterer Ausgestaltung der Erfindung ist vorgesehen, daß die Leitbleche im Bereich der äußeren Kanten eines im Längsschnitt etwa sägezahnförmigen Gehäuses mit diesem verbunden sind, wobei das Gehäuse im Querschnitt U-förmig ausgebildet ist und mit seinen aus seitlichen Schenkeln bestehenden Seitenwänden das Rohr einfaßt und wobei die Schrägflächen des Sägezahnprofils Leitflächen und die die Schrägflächen verbindenden Stufen Austrittsöffnungen bilden. Das sägezahnförmige Gehäuse bildet zweckmäßigerweise den den Siebkästen zugewandten Teil des rohrförmigen Gehäuses.

Das Rohr oder rohrartige Gehäuse kann in einer mittleren Querebene durch Abschlußbleche geteilt sein, wobei jede der durch die geteilten Rohr gebildeten Kammern mit einer eigenen Blasluftzuführung versehen ist. Durch diese Art der Teilung lassen sich durch jede der Kammern die Blasluftströme auf jeweils eine Seite des Mähdreschers umlenken.

Zweckmäßigerweise ist das Rohr bzw. sind die Rohre oder rohrartigen Gehäuse um eine Längsachse schwenkbar in den Seitenwänden gelagert, so daß sich die Richtung der die Spreu verteilenden Blasluftströme auch durch Drehung der Gehäuse einstellen läßt.

Eine getrennte Einstellung der linken und rechten Seite wird dadurch geschaffen, daß die geteilten Rohre im Bereich ihrer mittleren Trenn- oder Stirnwände um die Längsachse drehbar miteinander verbunden sind, so daß sich jedes der geteilten Rohre unabhängig von dem anderen verdrehen läßt.

In anderer Ausgestaltung der Erfindung ist vorgesehen, daß das Gehäuse bzw. die Gehäuse aus Rohren mit rechteckigem Querschnitt bestehen, wobei die den Siebkästen zugewandten Gehäuseseiten mit Öffnungen versehen sind, die ausgehend von der Quermittelebene durch schwenkbare Klappen verschließbar sind, deren freien Enden jeweils gegen die nächstliegenden Seitenwände weisen. Durch die Klappen läßt sich Menge und Richtung der Blasluft steuern.

Zweckmäßigerweise sind auch in den rohrartigen Gehäusen jeweils schräg nach außen verlaufende Leitbleche angeordnet.

In anderer Ausgestaltung der Erfindung ist vorgesehen, daß das rohrartige Gehäuse abschnittweise aufeinanderfolgend jeweils um 90° versetzt mit gegenüberliegenden schwenkbaren Klappen versehen ist. In dieser Ausgestaltung ist das rohrartige Gehäuse gleichsam rundum mit die Spreu verteilenden Blasluftdüsen versehen. Die Klappen können einen U-förmigen Querschnitt aufweisen, wobei die abgewinkelten Seitenteile das rohrartige Gehäuse einfassen und damit schärfer gebündelte Blasluftströme bilden.

Die Rohre bzw. rohrartigen Gehäuse können auf ihren äußeren Stirnseiten mit Blasluftzuführungen versehen sein. Um eine Drehbarkeit zu ermöglichen, können die Blasluftzuführungen aus Drehdurchführungen bestehen.

Nach einer anderen Ausgestaltung ist vorgesehen, daß die Gehäuse aus einzelnen kastenförmigen Körpern bestehen, die schwenkbar in Querträgern gelagert sind. Jeder kastenförmige Körper läßt sich dann entsprechend der gewünschten Ausblasrichtung einstellen.

Nach einer weiteren Ausgestaltung ist vorgesehen, daß das Gehäuse eine U-förmige oder muldenförmig gekrümmte Kammer begrenzt, deren Schenkel oder konkaven Seiten den Siebkästen zugewandt sind, wobei das Gehäuse in seiner den Siebkästen zugewandten Wandung bzw. in den von den U-Schenkeln eingefaßten Wandungen zungenartig herausgebogene Wandungsteile besitzt, die auf die Seitenwände des Mähdreschers gerichtete düsenförmige Öffnungen bilden. Die Gehäuse fangen sodann in ihren Mulden den die Spreu zuführenden Luftstrom auf und verteilen diesen durch entsprechende Anordnung der Blasluftdüsen über die Schnittbreite. Zusätzlich kann auch die Oberseite des U-förmigen Gehäuses mit durch zungenartig herausgebogene Wandungsteile gebildeten Düsenöffnungen versehen sein, die Ablagerungen von Spreu, Kurzstroh oder Staub verhindern.

Statt des unteren Schenkels des U-förmigen Gehäuses können auch ein dachförmiger Vorsprung mit zu dessen Schrägflächen etwa parallelen leistenförmigen Hohlkörpern vorgesehen sein, wobei die die Schrägflächen bildenden Wandungen und die zu diesen parallelen Wandungen der Hohlkörper mit durch zungenartig herausgebogenen Wandungsteilen gebildeten Düsenöffnungen versehen sind. Durch diese Anordnung läßt sich ein fächerartig gegen den Acker gerichteter, die Spreu verteilender Blasluftstrom erzeugen.

Nach einer weiteren Ausgestaltung der Erfindung ist vorgesehen, daß hinter den Siebkästen ein im Querschnitt etwa rechteckiger Kanal mit sich trichterförmig erweiterndem Auslaufbereich vorgesehen ist, wobei der Einlaufbereich des Kanals doppelwandig ausgebildet und die dadurch gebildete ringförmige Blasluftkammer mit Blasluftanschlüssen versehen ist. Die innere Wandung der Blasluftkammer ist lamellenartig oder durch zungenartige Leitbleche mit in Richtung auf den Auslaufbereich gerichteten Blasluftschlitzen versehen. Die auf den Auslaufbereich gerichteten Düsenöffnungen erzeugen durch Injektorwirkung eine den Blasluftstrom beschleunigende Strömung, so daß die Spreu mit guter Verteilung fächerartig auf den Boden ausgestreut wird. Zur Verbesserung der Strömungsverhältnisse kann sich zusätzlich auch der Einlaufbereich keil- oder trichterförmig verengen. In dem Auslaufbereich können fächerartig Luftleitbleche angeordnet sein, die die fächerartige Verteilung der Spreu begünstigen

In anderer Ausgestaltung ist vorgesehen, daß unterhalb des hinteren Endbereichs der Siebkästen ein flacher Blasluftkasten angeordnet ist, der in seiner oberen Wandung durch lamellenartig angeordnete Bleche oder durch herausgebogene Zungen mit düsenartigen Blasluftöffnungen versehen ist, die einen fächerartigen Blasluftstrom bilden.

Um einen besseren Zugang zu den Siebkästen zu ermöglichen und um die Einstellung der mit den schlitzförmigen Blasluftdüsen versehenen Gehäuse in zusätzlichen Richtungen zu ermöglichen, ist in weiterer Ausgestaltung der Erfindung vorgesehen, daß das Gehäuse bzw. das oder die Blasluftrohre in einem Schlitten längsverschieblich und schwenkbar gehaltert sind, der in seitlichen Führungen des Mähdreschers längsverschieblich geführt und feststellbar ist.

Die Drosselklappen und Leitbleche können von Hand einzeln einstellbar und arretierbar sein. Es können auch die Drosselklappen und Leitbleche einstellende Gestänge vorgesehen sein, die mit besonderen Einstellmotoren oder zur Einstellung mit Druckmittel-Kolben-Zylinder-Einheiten verbunden sind.

Ausführungsbeispiele der Erfindung werden nachstehend anhand der Zeichnung näher erläutert. In dieser zeigt

Fig. 1 eine Seitenansicht eines Mähdreschers in schematischer Darstellung mit einer aufgebrochenen Seitenwand, so daß die Strohschüttler, die Siebkästen und der die Spreu verteilende Blasluftdüsenkörper sichtbar ist.

Fig. 2 eine Draufsicht auf den Mähdrescher nach Fig. 1, bei dem der Bereich des Blasluftdüsenkörpers zur Verteilung der Spreu aufgebrochen ist,

Fig. 3 eine Draufsicht auf einen die Spreu verteilenden Blasluftdüsenkörper,

Fig. 3a einen Schnitt durch den Düsenkörper nach Fig. 3 längs der Linie A - A,

Fig. 4 eine andere Ausgestaltung eines rohrartigen Blasluftdüsenkörpers in Draufsicht,

Fig. 4a einen Schnitt durch den Blasluftdüsenkörper längs der Linie A - A in Fig. 4,

Fig. 5 eine dritte Ausführungsform eines rohrförmigen Blasluftdüsenkörpers in Draufsicht,

Fig. 5a einen Scnitt längs der Linie A - A in Fig. 5,

Fig. 6 eine Draufsicht auf eine Trägeranordnung mit in dieser schwenkbar gelagerten Blasluftkästen,

Fig. 6a einen Schnitt längs der Linie A - A durch die Anordnung nach Fig. 6,

Fig. 7 eine Draufsicht auf einen weiteren rohrförmigen Düsenkörper,

Fig. 7a einen Schnitt durch den Düsenkörper nach Fig. 7 längs der Linie A - A,

Fig. 8 eine Seitenansicht eines U-förmigen Düsenkörpers in schematischer Darstellung,

Fig. 9 eine Ansicht des Düsenkörpers in Richtung des Pfeils Y in Fig. 8,

Fig. 10 eine der Fig. 9 entsprechende Ansicht einer anderen Ausgestaltung des Düsenkörpers mit einem dachartigen Vorsprung und

Fig. 11 eine der Fig. 8 entsprechende Seitenansicht eines muldenförmigen Düsenkörpers.

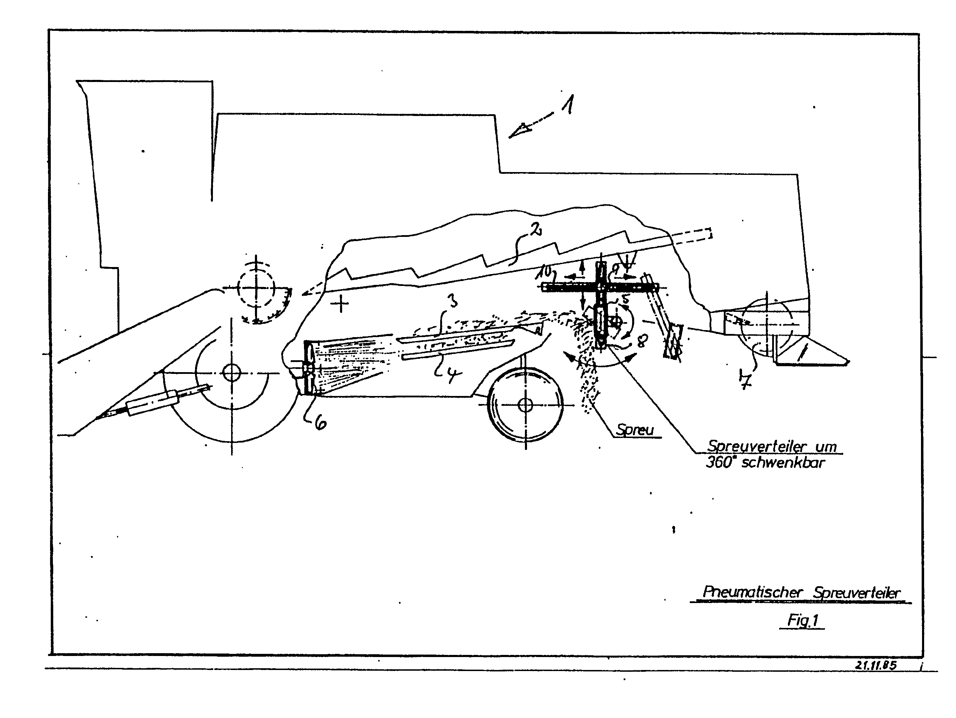

In Fig. 1 ist in Umrißlinien ein selbstfahrender Mähdrescher 1 angedeutet, dessen seitlich aufgebrochener Teil die Strohschüttler 2, das Kurzstrohsieb 3, das Körnersieb 4 und den die Spreu verteilenden Blasluftdüsenkörper 5 sichtbar macht. In Fahrtrichtung vor den Siebkästen 3, 4 ist ein Gebläse 6 angeordnet, das die Siebkästen 3, 4 anbläst und von diesen Kurzstroh und Spreu abbläst. Der Blasluftdüsenkörper 5 ist hinter den Siebkästen 3, 4 unterhalb des Strohschüttlers angeordnet. Der dargestellte Mähdrescher ist zusätzlich mit einem Anbauhäcksler 7 versehen. Der Blasluftdüsenkörper 5 befindet sich in dem Raum zwischen den Siebkästen 3, 4 und dem Anbauhäcksler 7 unterhalb der Strohschüttler 2.

Der aus einem langgestreckten rohrartigen Gehäuse bestehende Blasluftdüsenkörper ist längsverschieblich und schwenkbar in seitlichen Trägern 8 gehaltert, die schwenkbar in einem Schlitten 9 gelagert sind, der querverschieblich in Führungsschienen 10 geführt ist, die in horizontaler Richtung seitlich an den Wandungen des Mähdreschers 1 angeordnet sind. Die möglichen Verschiebe- und Schwenkrichtungen des Blasluftdüsenkörpers 5 sind in Fig. 1 durch Pfeile angedeutet. Weiterhin sind verschobene und verschwenkte Stellungen des Blasluftdüsenkörpers 5 in Fig. 1 strichpunktiert eingezeichnet.

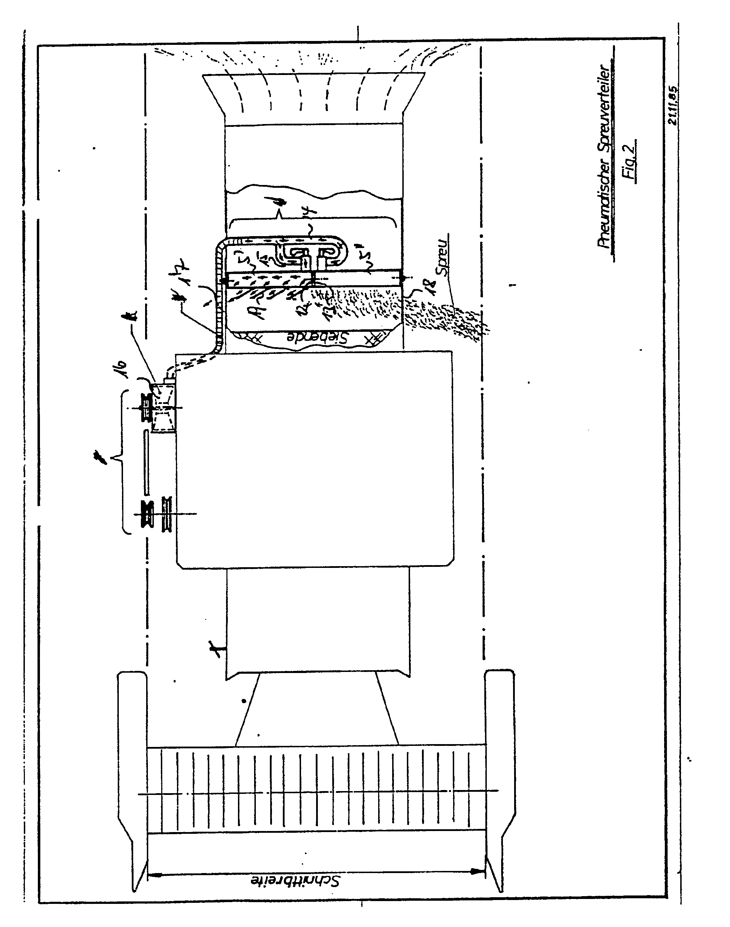

Wie aus Fig. 2 ersichtlich ist, besteht der Blasluftdüsenkörper 5 aus einem quer verlaufenden rohrartigen Körper, der in seinem mittleren Bereich durch Trennwände 12, 13 unterteilt ist. Die Blasluftdüsenkörperteile 5', 5" sind jeder für sich um eine horizontale Querachse schwenkbar. Die Blasluftdüsenkörper 5', 5" sind mit Anschlußstutzen versehen, an die Schläuche 14, 15 zur Zuführung von Blasluft angeschlossen sind. Die Blasluft wird von einem Gebläse 16 erzeugt, das über einen Keilriementrieb von dem Hauptantrieb des Mähdreschers angetrieben ist.

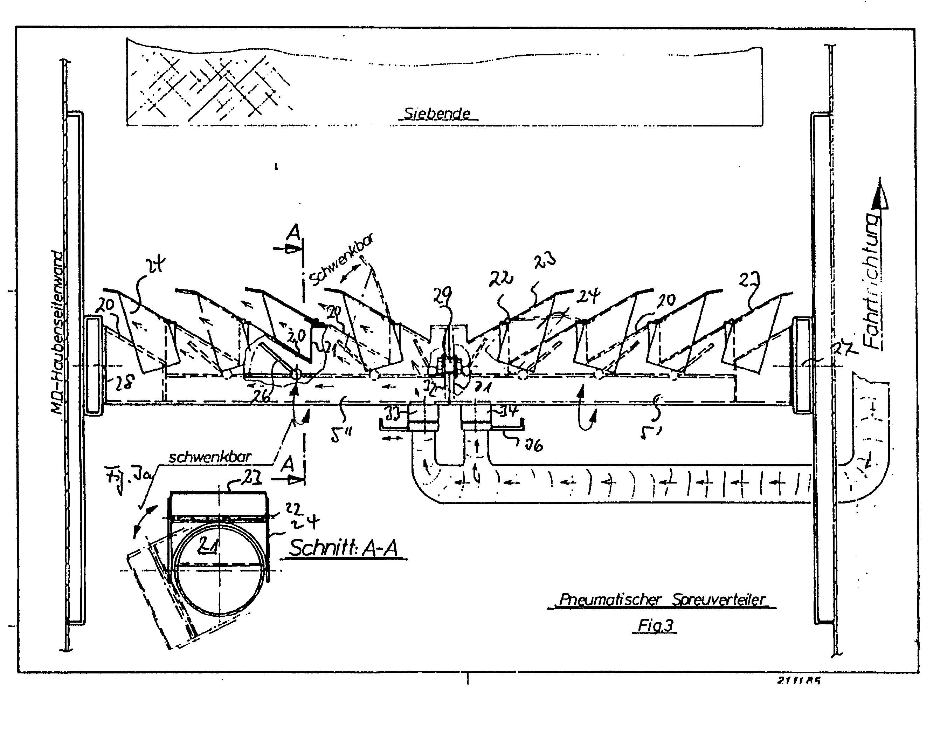

Die Blasluftdüsenkörperteile 5', 5" sind mit jeweils zu den angrenzenden Seitenwandungen 17, 18 weisenden Klappen 19 versehen, die Blasluftdüsenöffnungen begrenzen und den Spreufluß fächerartig über die Schnittbreite des Mähdreschers auf den Boden umlenken. Bei dem Ausführungsbeispiel nach Fig. 3 bestehen die Blasluftdüsenkörper 5', 5" jeweils aus rohrartigen Gehäusen, deren den Siebkästen zugewandte Seiten sägezahnförmig abgestuft sind. Die Abstufungen bestehen aus aufeinanderfolgenden abgeschrägten Wandungsteilen 20, die über Stufen 21 mit dem folgenden abgeschrägten Wandungsteil verbunden sind. Die Stufen 21 bilden etwa halbkreisförmige Austrittsöffnungen für die Blasluft. An den jeweils äußeren Kanten der sägezahnförmigen Stufen sind um etwa vertikale Achsen 22 Luftleitbleche 23 schwenkbar gelagert, die mit seitlich abgewinkelten Blechen 24 versehen sind, die die Blasluftdüsengehäuse 5', 5" seitlich einfassen.

Im Innern der rohrförmigen Blasluftkörpergehäuse 5', 5" sind im Bereich der durch die Stufen gebildeten Austrittsöffnungen 21 Drosselklappen 26 angeordnet, durch die sich die jeweils ausströmenden Mengen von Blasluft steuern lassen.

Die Blasluftdüsenkörper 5', 5" sind um Querachsen 27, 28 in den Seitenwänden der Haube des Mähdreschers schwenkbar gelagert. Sie sind darüberhinaus in ihrem mittleren Bereich um eine Querachse 29 schwenkbar miteinander verbunden. Die Querachse 29 ist in den die Düsenkörper 5', 5"

trennenden Seitenwandungen 31, 32 angeordnet.

Die die Düsenkörper 5', 5" mit den Blasluftzufüh-rungsschläuchen verbindenden Anschlußstutzen 33, 34 sind mit Schiebern 36 zur Steuerung der Blasluftmenge versehen.

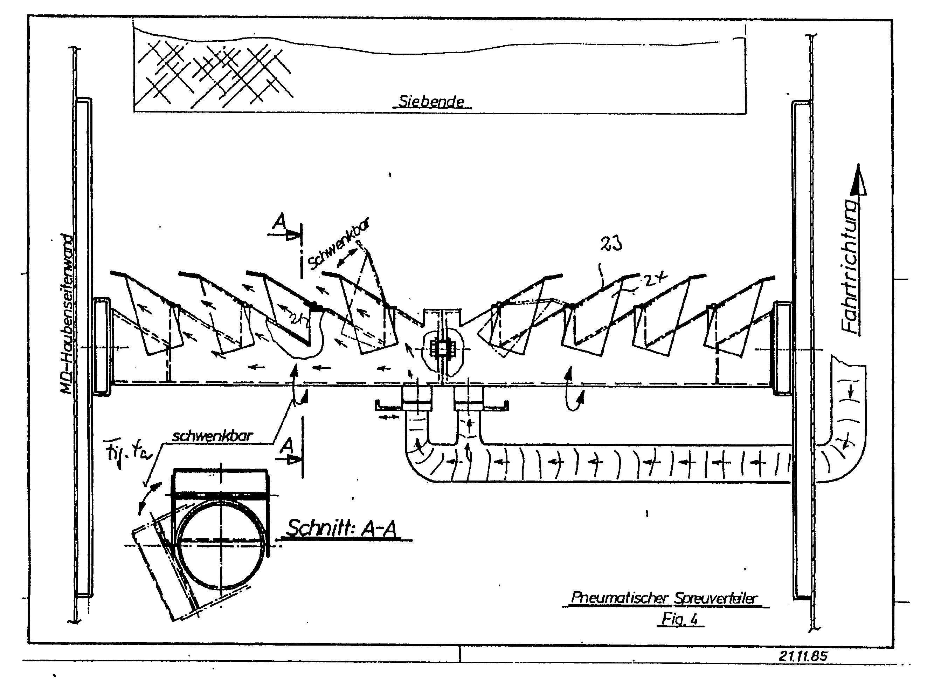

Das Ausführungsbeispiel nach den Fig. 4 und 4a unterscheidet sich von dem nach den Fig. 3 und 3a im wesentlichen nur dadurch, daß auf die die Blasluftmengen steuernden Drosselklappen 26 verzichtet worden ist.

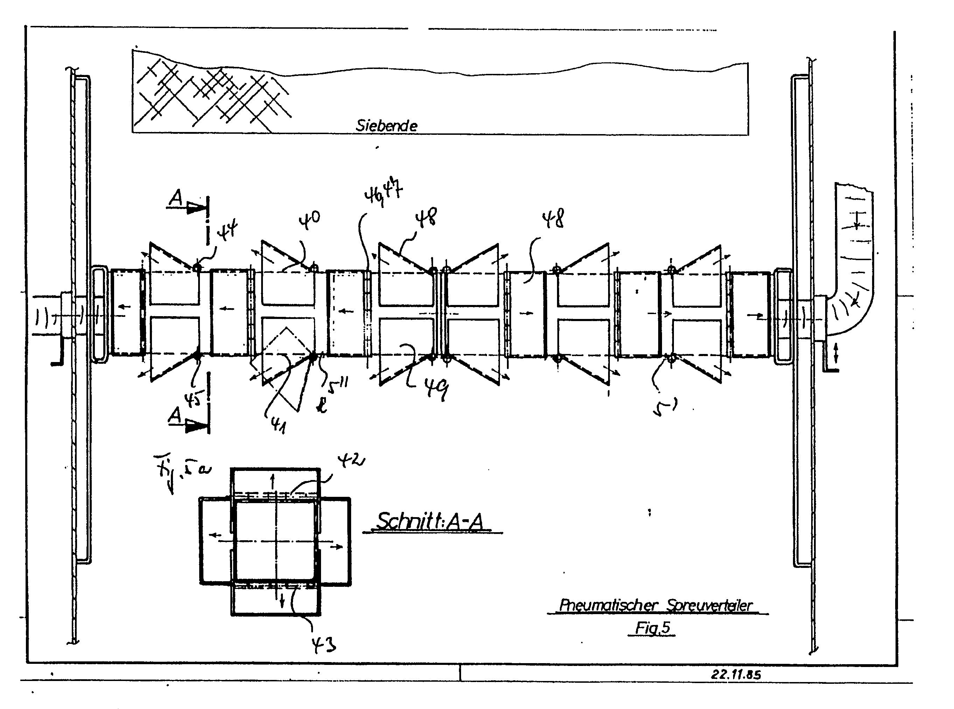

Bei dem Ausführungsbeispiel nach den Fig. 5, 5a bestehen die Teile 5' und 5" der Blasluftdüsenkörper aus im Querschnitt viereckigen Rohren, die in aufeinanderfolgenden Abschnitten um jeweils 90° versetzt zueinander mit gegenüberliebenden Blasluftaustrittsöffnungen 40, 41 und 42, 43 versehen sind. An den inneren Kanten dieser Blasluftöffnungen sind um zur Längsachese der Blasluftdüsenkörper 5', 5" rechtwin-kelige Achsen 44, 45 und 46, 47 Luftleitklappen 48 schwenkbar gelagert, die mit seitlichen abgewinkelten Blechen 49 versehen sind, die seitlich das Vierkantrohr des Blasluftdüsenkörpers einfassen Die in Draufsicht sichtbaren Luftleitbleche 48 verdecken jeweils die darunterliegenden Austrittsöffnungen 42. Bei dem Ausführungsbeispiel nach den Fig. 5 und 5a sind die Blasluftdüsenkörper 5', 5" also rundum mit schräggerichteten Düsenöffnungen versehen, die Blasluft zur Verteilung des Spreuflusses ausblasen

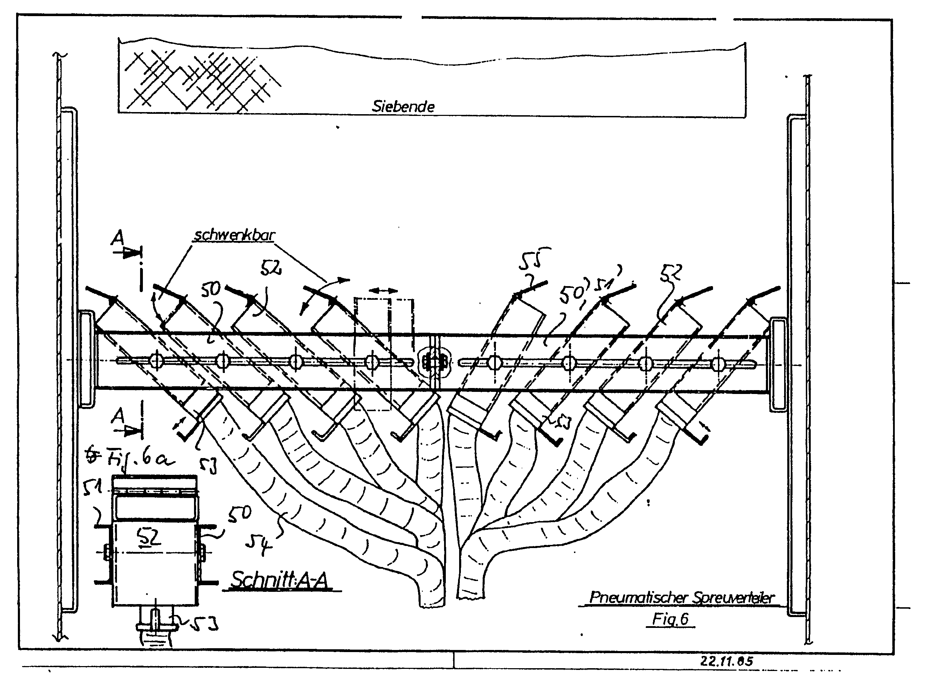

Bei dem Ausführungsbeispiel nach den Fig. 6 und 6a sind in den Haubenseitenwänden um eine horizontale Querachse schwenkbar paarweise angeordnete U-Träger 50,51 unr 50', 51' schwenkbargelagert, zwi-schen denen einzelne Blasluftkästen 52 schwenkbar gehaltert sind. Die Blasluftkästen 52 sind an ihren in Fahrtrichtung hinteren Enden mit Anschlußstutzen 53 für die Blasluftschläuche 54 versehen. An ihren in Fahrtrichtung vorderen Enden weisen die Kästen 52 schwenkbare Klappen 55 auf, mit denen der Blasluftstrom in der gewünschten Richtung umgelenkt werden kann.

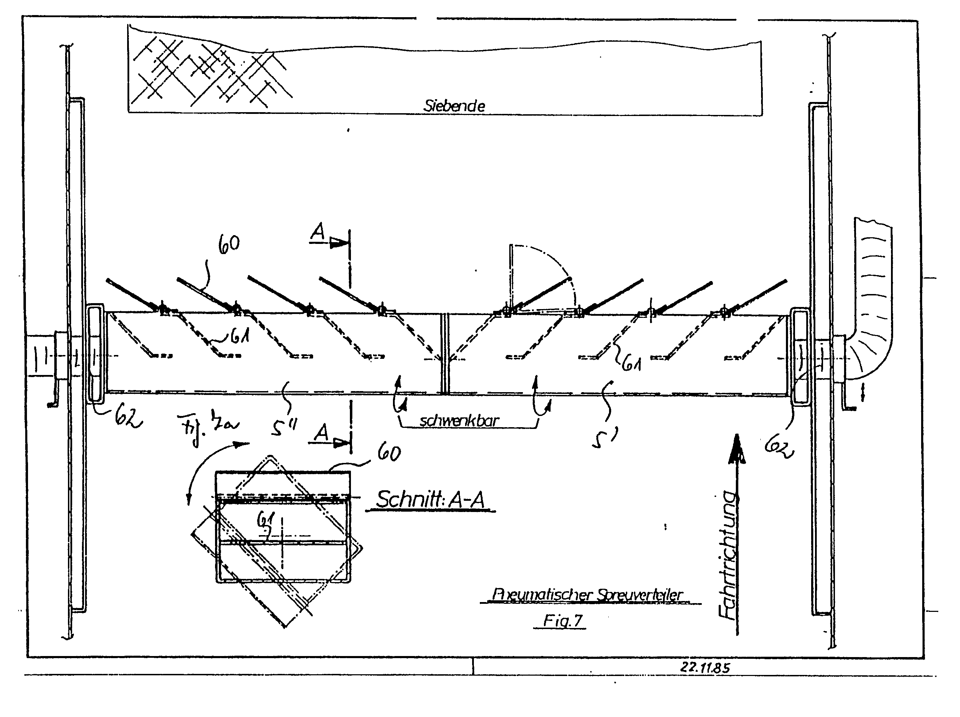

Bei dem Ausführungsbeispiel nach den Fig. 7 und 7a bestehen die Teile 5', 5" des Blasluftdüsenkörpers wiederum aus um eine horizontale Querachse relativ zueinander schwenkbaren Rohren mit viereckigem Profil, die auf ihren den Siebkästen zugewandten Seiten mit Austrittsöffnungen versehen sind, die durch schwenkbare Luftleitbleche 60 verschließbar sind. Durch diese Luftleitbleche 60 läßt sich der Blasluftstrom in die gewünschte Richtung einstellen.

Im Innern der Teile 5', 5" der Blasluftdüsenkörper sind Luftleitbleche 61 eingeschweißt, die die Blasluft verteilen und zu den Austrittsöffnungen leiten.

Die Blasluft wird den Teilen 5', 5" des Blasluftdü-senkörpers über stirnseitig angeordnete sogenannte Drehdurchführungen 62 zugeführt.

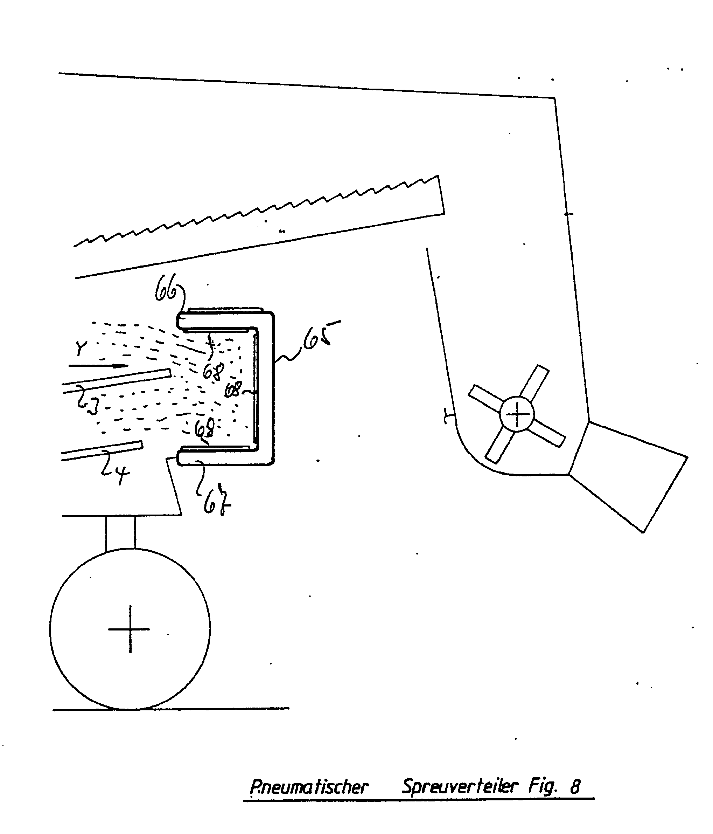

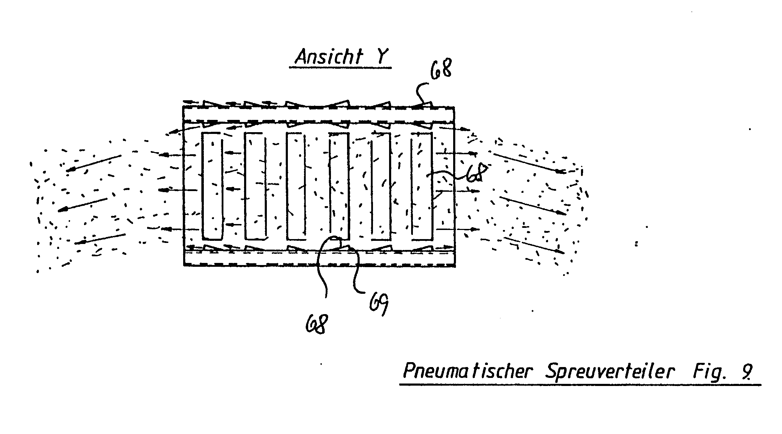

Bei dem Ausführungsbeispiel nach Fig. 8 besteht der Blasluftdüsenkörper aus einem Gehäuse 65, dessen Wandungen einen U-förmigen Kanal begrenzen, dessen Schenkel 66, 67 gegen die Siebkästen 3, 4 gerichtet sind. Die von den Schenkeln eingefaßten inneren Wandungen sind mit aus diesen herausgebogenen Zungen 68 versehen, die in der aus Fig. 9 ersichtlichen Weise schlitzförmige Düsenöffnungen begrenzen, die ausgehend von der Mitte jeweils nach außen gerichtet sind. Zum Abblasen von Staub und sich ablagernder Spreu ist auch die obere Wandung des oberen Schenkels mit zungenartig herausgebogenen Leitblechen 68 versehen.

Die Richtung des aus den spaltförmigen Düsenöffnungen 69 austretenden Blasluftstroms ist in Fig. 9 durch Pfeile angedeutet.

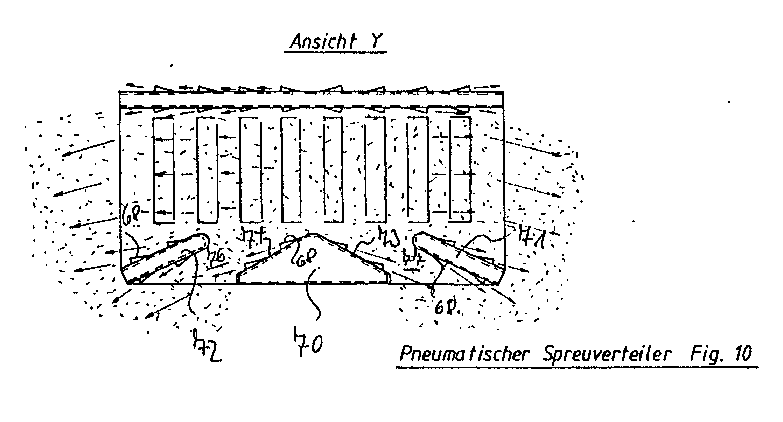

Statt des unteren Schenkels 67 in Fig. 8 und 9 kann, wie aus Fig. 10 ersichtlich, auch ein mittlerer dachförmig abgeschrägter Fortsatz 70 vorgesehen sein, zu dessen beiden Seiten stegartige Kammern 71, 72 vorgesehen sind, die etwa parallel zu den Schrägflächen 73, 74 des dachförmigen Körpers verlaufen. Die Schrägflächen 73, 74 sowie die oberen und unteren Seitenwandungen der stegartigen Körper 71, 72 sind ebenfalls mit herausgebogenen Zungen 68 versehen, so daß düsenartige Austrittsschlitze gebildet sind. Zwischen den Schrägflächen 73, 74 und den Körpern 71, 72 sind kanalartige Bereiche 76, 77 gebildet, die dem fächerartigen Ausblasen der Blasluft und damit der gewünschten Spreuverteilung dienen.

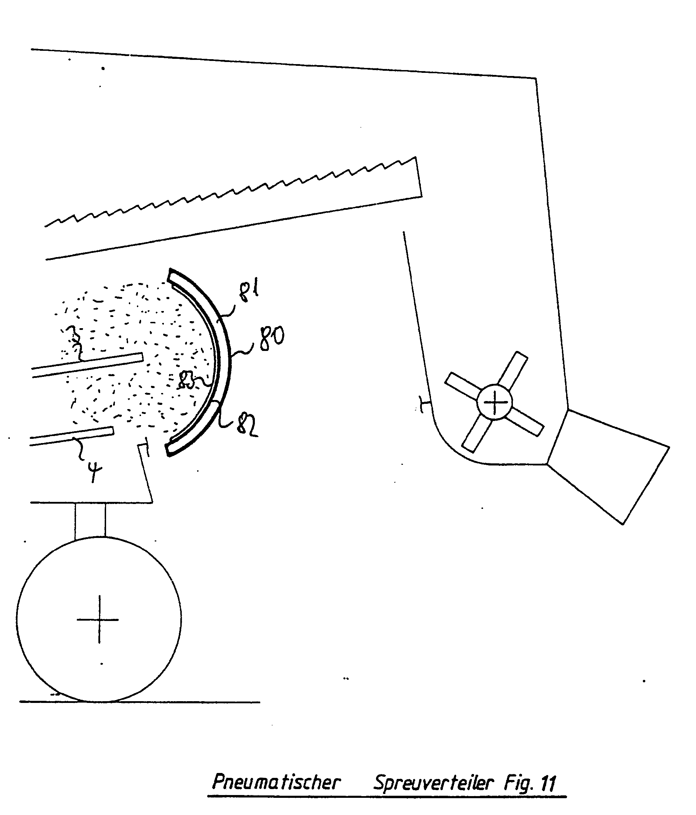

Bei dem Ausführungsbeispiel nach Fig. 11 besteht der Blasluftdüsenkörper aus einem schalenförmigen Gehäuse 80, das einen kreisbogenförmig gekrümmten Kanal 81 begrenzt. Die konkave Seite dieses schalenförmigen Blasluftdüsenkörpers ist den Sieben 3, 4 zugewandt. Die Innenwandung 82 des Blasluftdüsenkörpers 80 ist wiederum mit zungenartig herausgebogenen Luftleitblechen 83 versehen, die ausgehend von einer mittleren Vertikalebene jeweils auf die Seitenwände gerichtet sind.

## Ansprüche

1. Vorrichtung in Verbindung mit einem Mähdrescher zum Verteilen der Spreu mit mindestens einem Gehäuse, das mindestens einen Anschluß zur Zuführung von Druckluft und mindestens eine mit mindestens einem Leitblech versehene Ausblasöffnung aufweist, **dadurch gekennzeichnet,**

daß das Gehäuse unmittelbar oder über Trageinrichtungen an den Seitenwänden oder seitlichen Trägern des Mähdreschers (1) im Bereich der Höhe der Siebkästen (3, 4) hinter diesen und unterhalb der Strohschüttler (2) -soweit vorhanden - angeordnet ist,

wobei jede der etwa in Richtung der Siebkästen (3, 4) weisenden Ausblasöffnungen und die Leitbleche den austretenden Blasluftstrom in Richtung auf jeweils eine Seitenwand des Mähdreschers (1) umlenken.

2. Vorrichtung nach Anspruch 1, dadurch gekennzeichnet, daß das Gehäuse aus einem im Bereich der Seitenwände des Mähdreschers (1) befestigten, quer zu diesem verlaufenden Rohr (5) besteht, das mit mehreren über seine Länge verteilten Öffnungen versehen ist, und

daß im Bereich der vorzugsweise zumindest teilweise durch schwenkbare Klappen (19) verschließbaren Austrittsöffnungen Luftleitbleche (23) befestigt sind, die einen spitzen Winkel mit der Längsachse des Rohres einschließen und die ausgehend von dem mittleren Bereich des Rohres jeweils auf eine mit Seitenwand gerichtet sind, wobei die Leitbleche am Rohr oder Gehäuse vorzugsweise schwenkbar gelagert sind und wobei die Leitbleche vorzugsweise im Querschnitt U-förmig und mit etwa rechtwinkelig abgebogenen seitlichen Blechen (24) versehen sind.

3. Vorrichtung nach Anspruch 1 oder 2, dadurch gekennzeichnet, daß die Leitbleche (23) im Bereich der äußeren Kanten eines im Längsschnitt etwa sägezahnförmigen Gehäuses mit diesen verbunden sind, das im Querschnitt U-förmig ausgebildet ist und mit seinen aus seitlichen Schenkeln bestehenden Seitenwänden das Rohr einfaßt, und daß die Schrägfläche des Sägezahnprofils Leitflächen und die die Schrägflächen verbindenden Stufen Austrittsöffnungen bilden, wobei das sägezahnförmige Gehäuse vorzugsweise den den Siebkästen (3, 4) zugewandten Teil des rohrförmigen Gehäuses bildet, wobei das Rohr oder rohrartige Gehäuse vorzugsweise in seiner mittleren Querebene durch Anschlußbleche geteilt und jede der durch die geteilten Rohre gebildeten Kammern mit einer eigenen Blasluftzuführung versehen ist und wobei das Rohr bzw. die Rohre oder rohrartigen Gehäuse vorzugsweise um eine Längsachse schwenkbar in den Seitenwänden des Mähdreschers (1) drehbar gelagert sind.

4. Vorrichtung nach einem der Ansprüche 1 bis 3, dadurch gekennzeichnet, daß die geteilten Rohre im Bereich ihrer mittleren Trenn- oder Stirnwände um die Längsachse drehbar miteinander verbunden sind.

5. Vorrichtung nach einem der Ansprüche 1 bis 4, dadurch gekennzeichnet, daß das Gehäuse bzw. die Gehäuse aus Rohren mit rechteckigem Querschnitt bestehen, daß die den Siebkästen (3, 4) zugewandten Gehäuseseiten mit Öffnungen versehen sind, die ausgehend von der vertialen Quermittelebene durch schwenkbare Klappen (55) verschließbar sind, deren freie Enden jeweils gegen die nächstliegenden Seitenwände weisen, und daß in den rohrartigen Gehäusen vorzugsweise jeweils schräg nach außen verlaufende Leitbleche (61) angeordnet sind.

6. Vorrichtung nach einem der Ansprüche 1 bis 5, dadurch gekennzeichnet, daß das rohrartige Gehäuse abschnittweise aufeinanderfolgend jeweils um 90° versetzt mit paarweise einander gegenüberliegenden, spiegelbildlich zueinander angeordneten schwenkbaren Klappen (48) versehen ist, die vorzugsweise einen U-förmigen Querschnitt aufweisen und deren abgewinkelte Seitenteile das rohrartige Gehäuse einfassen, und daß die Rohre bzw. rohrartigen Gehäuse vorzugsweise auf ihren äußeren Stirnseiten mit Blasluftzuführungen versehen sind, die vorzugsweise aus Drehdurchführungen bestehen.

7. Vorrichtung nach Anspruch 1, dadurch gekennzeichnet, daß die Gehäuse aus einzelnen kastenförmigen Körpern (52) bestehen, die schwenkbar in Querträgern (50, 51, 50', 51') gelagert sind.

8. Vorrichtung nach Anspruch 1, dadurch gekennzeichnet, daß das Gehäuse eine U-förmige oder muldenförmig gekrümmte Kammer (80) begrenzt, deren Schenkel oder konkave Seite den Siebkästen (3, 4) zugewandt sind, und daß das Gehäuse in seiner den Siebkästen zugewandten Wandung bzw. in den von den U-Schenkeln eingefaßten Wandungen zungenartig herausgebogene, Leitbleche bildende Wandungsteile (83) besitzt, die in Richtung der Seitenwände des Mähdreschers (1) gerichtete düsenförmige Öffnungen schaffen, wobei die Oberseite des U-förmigen Gehäuses vorzugsweise mit durch zungenartig herausgebogene Wandungsteile gebildeten Düsenöffnungen versehen ist.

9. Vorrichtung nach Anspruch 8, dadurch gekennzeichnet, daß statt des unteren Schenkels des U-förmigen Gehäuses ein dachförmiger Vorsprung (70) mit zu dessen Schrägflächen (73, 74) etwa parallelen leistenförmigen Hohlkörpern (71, 72) vorgesehen ist und daß die die Schrägflächen bildenden Wandungen und die zu diesen parallelen Wandungen der Hohlkörper mit durch zungenartig herausgebogene Wandungsteilen gebildeten Düsenöffnungen (68) versehen sind.

10. Vorrichtung nach Anspruch 1, dadurch gekennzeichnet, daß hinter den Siebkästen (3, 4) ein im Querschnitt etwa rechteckiger Kanal mit sich trichterförmig erweiterndem Auslaufbereich (92) angeordnet ist, daß der Einlaufbereich (91) des Kanals doppelwandig ausgebildet und die dadurch gebildete ringförmige Blasluftkammer (93) mit Blasluftanschlüssen versehen ist und daß die innere Wandung der Blasluftkammer lamellenartig oder durch zungenartige Leitbleche (94) mit in Richtung auf den Auslaufbereich gerichteten Blasluftschlitzen (95) versehen ist, wobei sich der Einlaufbereich vorzugsweise keil- oder trichterförmig verengt und wobei in dem Auslaufbereich vorzugsweise fächerartig Leitbleche angeordnet sind.

11. Vorrichtung nach Anspruch 1, dadurch gekennzeichnet, daß unterhalb des hinteren Endbereichs der Siebkästen (3, 4) ein flacher Blasluftkasten angeordnet ist, der in seiner oberen Wandung durch lamellenartig angeordnete Bleche oder durch herausgebogene Zungen mit düsenartigen Blasluftöffnungen versehen ist, die einen fächerartigen Blasluftstrom mit seitlichen Komponenten zu den Mähdrescherseitenwänden bilden.

12. Vorrichtung nach einem der Ansprüche 1 bis 11, dadurch gekennzeichnet, daß das Gehäuse bzw. das oder die Blasluftrohre in einem Schlitten (9) längsverschieblich und schwenkbar gehaltert sind, der in seitlichen Führungen (10) des Mähdreschers (1) längsverschieblich geführt und feststellbar ist.

## Claims

1. An apparatus in conjunction with a combine harvester for distributing chaff and having at least one housing comprising at least one connection for the supply of compressed air and with at least one blowout orifice provided with at least one guide plate, characterised in that the housing is disposed directly or through supporting means on the side walls or lateral bearers on the combine harvester (1) in the region of the height of the sieve boxes (3, 4), behind these latter and underneath the straw riddler (2), if this exists, each of the blower orifices pointing substantially in the direction of the sieve boxes (3, 4) and the guide plates deflect the emerging blown air stream in the direction of a respective side wall of the combine harvester (1).

2. An apparatus according to claim 1, characterised in that the housing consists of, mounted in the region of the side walls of the combine harvester (1) and extending transversely thereto, a pipe (5) which is provided with a plurality of apertures distributed over its length and in that there are mounted in the region of the outlet orifices which can be preferably at least partially closed by pivotable flaps (19), air guide plates (23) which enclose an acute angle with the longitudinal axis of the pipe and which, starting from the middle part of the pipe, are directed in each case at a side wall, the guide plates being preferably pivotably mounted on the pipe or housing, the guide plates preferably being of U-shaped cross-section and being provided with lateral plates (24) bent over substantially at a right-angle.

3. An apparatus according to claim 1 or 2, characterised in that in the region of the outer edges of a housing which is substantially serrated in longitudinal section, the guide plates (23) are connected thereto, the housing having a U-shaped cross-section, its side walls which consist of lateral arms engaging around the pipe, and in that the sloping surface of the serrated profile forms guide surfaces while the steps connecting the sloping surfaces form outlet orifices, the sawtooth-shaped or serrated housing preferably forming the part of the tubular housing which faces the sieve boxes (3, 4), the pipe or tubular housing being preferably divided in its transverse central plane by connecting plates, each of the chambers formed by the divided pipe being provided with its own blown air supply, the pipe or pipes or tubular housing being preferably mounted to pivot about a longitudinal axis and to rotate in the side walls of the combine harvester (1).

4. An apparatus according to one of claims 1 to 3, characterised in that the divided pipes are in the region of their middle partitions or end walls connected to one another in such a way that they can rotate about their longitudinal axis.

5. An apparatus according to one of claims 1 to 4, characterised in that the housing or housings consists or consist of pipes of rectangular cross-section and in that the sides of the housing(s) which face the sieve boxes (3, 4) are provided with apertures which, starting from the vertical transverse central plane, can be closed by pivotable flaps (55), the free ends of which in each case point towards the nearest side walls and in the tubular housings there are preferably obliquely outwardly extending guide plates (61).

6. An apparatus according to one of claims 1 to 5, characterised in that the tubular housing has consecutive portions which are in each case offset by 90° to one another and has pairs of oppositely disposed mirrored image pivotable flaps (48) which preferably have a U-shaped cross-section and of which the angled-over side parts grip the tubular housing and in that the pipe or tubular housing are provided preferably on its outer ends with blown air supply means which preferably consist of rotary through-ways.

7. An apparatus according to claim 1, characterised in that the housings consist of individual box-like members (52) which are mounted to pivot in transverse bearers (50, 51, 50', 51').

8. An apparatus according to claim 1, characterised in that the housing defines a chamber (80) which is curved into a trough-shape or which is U-shaped, and of which the arms or concave side face the sieve boxes (3, 4) and in that in its wall facing the sieve boxes or in the walls gripped by the arms of the U-shaped member, the housing comprises wall parts (83) which are bent outwardly like tongues and which form guide plates to form nozzle-like apertures which are directed at the side walls of of the combine harvester (1), the top of the U-shaped housing preferably being provided with nozzle orifices formed by wall parts which are bent outwardly like tongues.

9. An apparatus according to claim 8, characterised in that instead of the lower arm of the U-shaped housing a roof-like projection (70) is provided which has strip-like hollow members (71, 72) extending substantially parallel with its sloping surfaces (73, 74) and in that the walls-forming the sloping surfaces and the walls of the hollow members which are parallel therewith are provided with nozzle orifices (68) formed by wall parts which are bent outwardly like tongues.

10. An apparatus according to claim 1, characterised in that behind the sieve boxes (3, 4) there is a cross-sectionally substantially rectangular passage having an outlet zone (92) which widens out like a funnel and in that the inlet zone (91) of the passage is of double walled construction, the resultant annular blown air chamber (93) being provided with blown air connections, and in that the inner wall of the blown air chamber is lamellar or by reason of tongue-like guide plates (94), is provided with blown air vents (95) directed at the outlet zone, the inlet zone having a preferably wedge-shaped or funnel-like narrowing, guide plates or baffles being disposed preferably fanwise in the outlet zone.

11. An apparatus according to claim 1, characterised in that beneath the rear end portion of the sieve boxes (3, 4) there is a shallow blown air tank which in its upper wall has lamellar-wisely disposed plates or outwardly bent tongues to constitute nozzle-like blown air orifices which form a fan-like stream of blown air with lateral components in relation to the side walls of the combine harvester.

12. An apparatus according to one of claims 1 to 11, characterised in that the housing or the blown air pipe is/are longitudinally displaceably and pivotably mounted in a slide (9) which is guided for longitudinal displacement and which is lockable in lateral guides (12) on the combine harvester (11).

**Revendications**

1. Dispositif,en liaison avec une moissonneuse-batteuse, pour l'épandage de balle avec au moins un bâti qui présente au moins un raccordement pour l'alimentation en air comprimé et au moins une ouverture de sortie pourvue d'une tôle de guidage, caractérisé en ce que le bâti est agencé directement sur les parois latérales ou les poutres latérales de la moissonneuse-batteuse (1), ou bien,par l'intermédiaire de systèmes de support, dans la partie de la hauteur des tamis (3, 4), derrière ceux-ci et en dessous du secoueur de paille (2), s'il est présent, ainsi chacune des ouvertures de sortie dirigée à peu près dans le sens des tamis (3, 4) et les tôles de guidage devient le courant d'air sortant dans la direction d'une paroi latérale de la moissonneuse-batteuse (1).

2. Dispositif selon la revendication 1, caractérisé en ce que le bâti se compose d'un tube (5) fixé dans la zone des parois latérales de la moissonneuse-batteuse (1), passant transversalement à celles-ci, lequel est pourvu de plusieurs ouvertures réparties sur toute sa longueur et en ce que dans la zone des ouvertures de sortie pouvant avantageusement au moins partiellement être fermées par des clapets pivotants (19), sont fixées des tôles de guidage de l'air (23) qui forment un angle aigu avec l'axe longitudinal du tube et qui, en partant de la zone médiane du tube, sont, à chaque fois, dirigées vers la paroi latérale la plus proche, les tôles de guidage étant reçues avantageusement pivotantes sur le tube ou le bâti et les tôles de guidage étant avantageusement de section transversale en forme de U et pourvues de tôles latérales (24) courbées à peu près à angle droit.

3. Dispositif selon la revendication 1 ou 2, caractérisé en ce que les tôles de guidage (23) sont reliées, dans la zone des bords externes d'un bâti à peu près en forme de dents de scie en coupe longitudinale, à celui-ci, lequel est configuré en section transversale en forme de U et entoure, par ses parois latérales formées de branches latérales, le tube, et en ce que les surfaces obliques du profil en dents de scie forment des surfaces de guidage et les gradins reliant les surfaces obliques forment des ouvertures de sortie et le bâti en forme de dents de scie forme avantageusement la partie du boîtier tubulaire tournée vers les tamis (3, 4), ainsi le tube ou bien le bâti tubulaire est divisé avantageusement,dans son plan transversal moyen, par des tôles de raccordement et chacune des chambres formées à travers les tubes divisés est pourvue de sa propre alimentation en air de soufflage et le tube ou, respectivement, les tubes ou le boîtier tubulaire sont avantageusement logés pivotants autour d'un axe longitudinal et rotatifs dans les parois latérales de la moissonneuse-batteuse (1).

4. Dispositif selon l'une quelconque des revendications 1 à 3, caractérisé en ce que les tubes divisés sont reliés les uns aux autres dans la zone de leurs parois moyennes de séparation ou frontales en étant rotatifs autour de l'axe longitudinal.

5. Dispositif selon l'une quelconque des revendications 1 à 4, caractérisé en ce que le bâti ou, respectivement, les bâtis se composent de tubes de section transversale rectangulaire, en ce que les côtés de bâti tournés vers les tamis (3, 4) sont pourvus d'ouvertures qui, en commençant au plan transversal vertical, peuvent être fermées par des clapets pivotants (55), dont les extrémités libres sont dirigées vers la paroi latérale voisine et en ce que dans les bâtis tubulaires sont agencées des tôles de guidage (61) avantageusement obliques et dirigées vers l'extérieur.

6. Dispositif selon l'une quelconque des revendications 1 à 5, caractérisé en ce que le bâti tubulaire est pourvu de clapets pivotants (48) se suivant par tronçons, décalés à chaque fois de 90°, et agencés par paires en vis-à-vis et en image-miroir, lesquels présentent avantageusement une section transversale en forme de U et dont les parties latérales en angle entourent le bâti tubulaire et en ce que les tubes ou, respectivement, le bâti tubulaire sont pourvus avantageusement à leurs côtés frontaux externes d'alimentations en air de soufflage qui se composent avantageusement de passages tournants.

7. Dispositif selon la revendication 1, caractérisé en ce que les bâtis se composent de corps individuels (52) en forme de caisson qui sont logés pivotants dans des poutres transversales (50, 51, 50', 51').

8. Dispositif selon la revendication 1, caractérisé en ce que le bâti délimite une chambre en forme de U ou courbée en forme de cavité (80), dont les branches ou côtés concaves sont tournés vers les tamis (3, 4) et en ce que le bâti possède,dans ses parois tournées vers les tamis ou, respectivement, dans les parois entourées par les branches en U, des parties de paroi (83) courbées vers l'extérieur, et formant des tôles de guidage, qui créent des ouvertures en forme de tuyères dirigées vers les parois latérales de la moissonneuse-batteuse (1), le dessus du bâti en forme de U étant pourvu avantageusement d'ouvertures de tuyère formées de parties de paroi cintrées vers l'extérieur et en forme de langue.

9. Dispositif selon la revendication 8, caractérisé en ce qu'en dessous de la branche inférieure du bâti en forme de U est prévue une saillie (70) en forme de toit avec des corps creux (71, 72) à peu près parallèles à ses surfaces obliques (73, 74) et en forme de baguette et en ce que les parois formant les surfaces obliques et les parois des corps creux qui leur sont parallèles sont pourvues d'ouvertures de tuyère (68) formées par des parties de paroi tournées vers l'extérieur en forme de langue.

10. Dispositif selon la revendication 1, caractérisé en ce que derrière les tamis (3, 4) est agencé un canal à peu près rectangulaire avec zone de sortie (92) s'élargissant à peu près à la façon d'une trémie, en ce que la zone d'entrée (91) du canal est configurée à double paroi et en ce que la chambre d'air de soufflage annulaire (93) ainsi formée est pourvue de raccordements d'air de soufflage et en ce que la paroi interne de la chambre d'air de soufflage est pourvue de fentes d'air de soufflage (95) dirigées vers la zone de sortie, en forme de lamelle ou bien formées de tôles de guidage (94) en forme de langue, et la zone d'entrée se rétrécit avantageusement en forme de cale ou d'entonnoir et dans la zone de sortie sont avantageusement agencées des tôles de guidage en forme d'éventail.

11. Dispositif selon la revendication 1, caractérisé en ce qu'en dessous de la zone extrême arrière des tamis (3, 4) est agencé un caisson plat d'air de soufflage qui est pourvu, à sa paroi supérieure, d'ouvertures d'air de soufflage en forme de tuyère grâce à des tôles agencées en lamelle ou grâce à des langues courbées vers l'extérieur, qui forment un courant d'air de soufflage à la façon d'un éventail avec composantes latérales par rapport aux parois latérales de la moissonneuse-batteuse.

12. Dispositif selon l'une quelconque des revendications 1 à 11, caractérisé en ce que le bâti ou, respectivement, le ou les tubes d'air de soufflage sont retenus mobiles longitudinalement dans un chariot (9) ou bien pivotants, lequel peut être guidé mobile longitudinalement ou maintenu dans des guidages latéraux (10) de la moissonneuse-batteuse (1).

Spreuverteiler um 360° schwenkbar

Spreu

Pneumatischer Spreuverteiler   Fig.1

21.11.85

Pneumatischer Spreuverteiler

Fig.2

21.11.85

Pneumatischer Spreuverteiler
Fig.3

Schnitt: A-A

EP 0 224 750 B1

Siebende

MD-Haubenseitenwand

Fahrtrichtung

A

schwenkbar

23

24

schwenkbar

Fig. 4a

Schnitt: A-A

Pneumatischer Spreuverteiler

Fig. 4

21.11.85

Siebende

A

44  40  46 47  48  48

A

45

41  5'  49  5)

Fig. 5a

42

Schnitt: A-A

43

Pneumatischer Spreuverteiler

Fig. 5

22.11.85

Siebende

schwenkbar

Fig. 6a

Schnitt A-A

Pneumatischer Spreuverteiler
Fig. 6

22.11.65

Siebende

Schnitt: A-A

schwenkbar

Fig. 7a

Pneumatischer Spreuverteiler

Fig. 7

Fahrtrichtung

22.11.85

EP 0 224 750 B1

*Pneumatischer Spreuverteiler Fig. 8*

Ansicht Y

68

68

68

69

Pneumatischer Spreuverteiler   Fig. 9

EP 0 224 750 B1

Ansicht Y

Pneumatischer Spreuverteiler  Fig. 10

*Pneumatischer   Spreuverteiler Fig. 11*